# EUROPEAN PATENT APPLICATION

(11) **EP 1 213 672 A2**
(43) Date of publication of application: **12.06.2002**
(21) Application number: 01124709.5
(22) Date of filing: 16.10.2001
(51) Int. Cl.: G06F 17/60

(54) **Item allocation method, system and program for workflow system**

(30) Priority: 11.12.2000 JP 2000381663
(71) Applicant: Hitachi, Ltd., Chiyoda-ku, Tokyo 101-8010 (JP)
(72) Inventor: Araki, Tetsuya, c/o Hitachi, Ltd., Int. Prop. Gr., Chiyoda-ku, Tokyo 100-8220 (JP); Ichikawa, Kazuyuki, Hitachi, Ltd., Int. Prop. Gr., Chiyoda-ku, Tokyo 100-8220 (JP)
(74) Representative: Strehl Schübel-Hopf & Partner

(57) **Abstract**

Clients are prevented from issuing allocation requests to the same items by using a condition depending upon work and a selection key when selecting items to be allocated. By thus selecting allocation subjects so as not to cause competition and thereby reducing exclusive waiting, the efficiency of allocation processing in a large scale workflow system can be raised.

## Description

### BACKGROUND OF THE INVENTION

The present invention relates to an efficient item allocation method in such a large scale work flow system that some of a plurality of workers or a plurality of workers share processing of one item.

In JP-A-8-287162, there is described a method of altering users allotted to respective work points on the basis of achievement evaluation of each work point in a workflow system.

In JP-A-11-338938, there is described a method of retaining information concerning business processing in a workflow system and distributing the business to persons in charge on the basis of the aforementioned information.

In JP-A-2000-3393, there is described a method of retaining work achievements in a workflow system as history information and allotting workers on the basis of the aforementioned history information.

In JP-A-10-97566, there is described a method of providing a work item with work information in a workflow system, comparing the aforementioned work information with information concerning workers, and allocating items.

In JP-A-10-326306, there is described a method of allocating items on the basis of list information of items in a workflow and hierarchical information of an organization that processes the items.

Furthermore, there is such a business management method that the server does not automatically conduct item allocation, but a worker specifies an item, issues an allocation request, and acquires work as in JP-A-11-238087.

If the number of workers to which item allocation should be conducted at the same time increases for the same item group, then items selected by a plurality of workers as allocation subjects overlap, and competition and exclusive waiting occur.

The conventional arts are such allocation methods that the server determines which worker an item should be allocated to. In the conventional arts, there is no description concerning complying with a request of a worker (client). Furthermore, in the conventional art that includes description concerning worker's item selection, there is no description concerning a problem of performance caused in the case where a plurality of workers request items and an item requested by a certain worker competes with an item requested by another worker.

Furthermore, databases have such a characteristic that exclusive waiting occurs provided that an update request is issued for data excluded by another transaction. However, a method for solving this problem is not described.

As a result, it is difficult to apply a workflow system to large scale business.

### SUMMARY OF THE INVENTION

An object of the present invention is to facilitate adaptation of a workflow system to large scale business by providing such an item allocation method as to reduce the probability of occurrence of exclusive waiting that is the aforementioned problem.

A workflow system of the present invention provides, as one means for achieving the above described object, a method in the server of storing workflow items, extracting items of a determined condition from among stored items, receiving an item acquisition request from a terminal, and selecting allocation items from among the extracted items by using an item selection key according to the received item acquisition request.

Furthermore, in the present invention, by using an item selection key depending upon a work terminal, a work program and a worker identifier included in the workflow system, the probability of occurrence of exclusive waiting is reduced and adaptation of the workflow system to large scale business is facilitated.

### BRIEF DESCRIPTION OF THE DRAWINGS

FIG. 1 is a configuration diagram of a workflow system according to the present invention;
FIG. 2 is a diagram showing an example of a business process of business to which the present invention has been applied;
FIG. 3 is a diagram showing an item data table in an embodiment of the present invention;
FIG. 4 is a flow chart of a workflow client in an embodiment of the present invention;
FIG. 5 is a flow chart of a workflow control section in an embodiment of the present invention;
FIG. 6 is a diagram showing an example of a configuration in the case where an IP address is used to select an allocation subject;
FIG. 7 is a diagram showing an example of a configuration in the case where a thread ID is used to select an allocation subject;
FIG. 8 is a diagram showing an example of application of the present invention to a large scale system;
FIG. 9 is a diagram showing an example of a business process in a sale system 801;
FIG. 10 is a diagram showing an example of an item extraction condition table corresponding to a business process of FIG. 9;
FIG. 11 is a diagram showing an example of a business process in a large scale system;

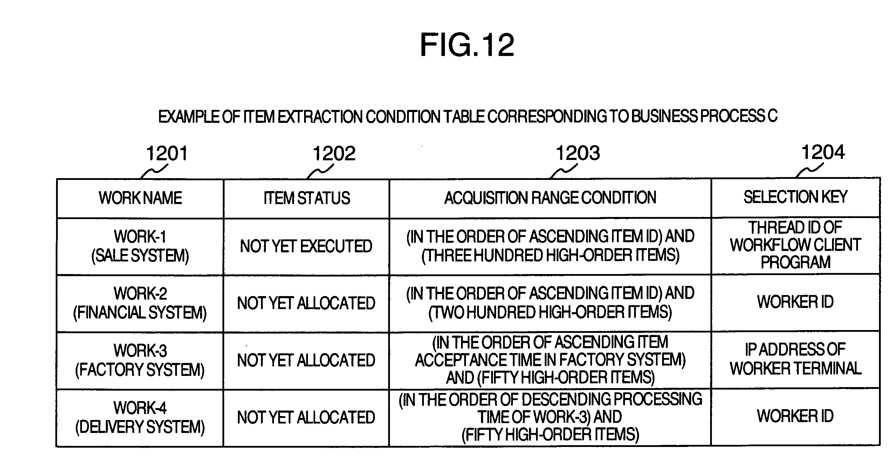

FIG. 12 is a diagram showing an example of an item extraction condition table corresponding to a business process of FIG. 11;
FIG. 13 is a diagram showing an example of a configuration of a system to which the present invention is applied; and
FIG. 14 is a diagram showing an example of various data and selection keys in the case where a system of FIG. 13 is applied to the present invention.

### DESCRIPTION OF THE EMBODIMENTS

Embodiments of the present invention will now be described.

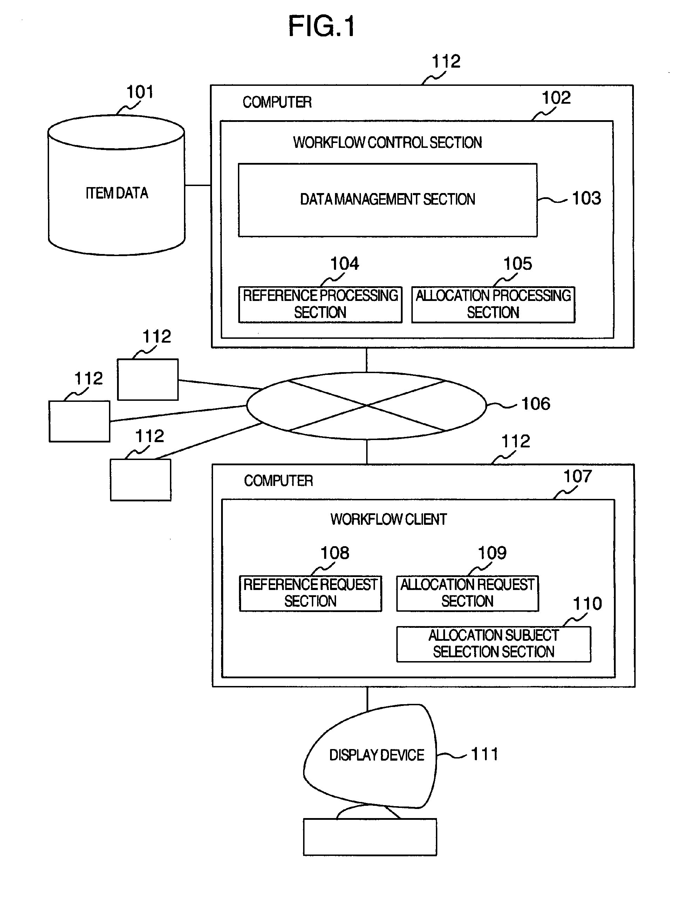

FIG. 1 is a configuration diagram of a workflow system to which an item allocation method of the present invention has been applied. The workflow system includes item data 101 (hereafter, a database that stores item data will be referred to as item data 101), a workflow control section 102 for conducting reference and update of data stored in the item data 101, and a workflow client 107 for issuing a request of reference or update. By the way, the workflow control section 102 and the workflow client 107 are programs that operate on computers 112.

A computer on which the workflow control section 102 operates and a computer on which the workflow client 107 operates are connected via a network 106. The workflow control section 102 and the workflow client 107 may be separated into different devices (computers), or may be disposed on the same device (computer). Hereafter, a computer on which a workflow client program operates will also be referred to as client computer sometimes. Furthermore, the term "terminal" may mean a client computer, or the terminal may mean a portable terminal that gives some order to a client computer (the terminal may be a portable terminal capable of communicating with a workflow client program and giving an order to the client program even if the client program does not operate on the portable terminal). The terminal may be a computer that conducts item processing.

With respect to the item data 101, a data management section 103 conducts data management of each item, such as registration of data concerning items, update of item states and workers, and referring to data concerning items included in the item data 101.

A reference processing section 104 acquires data concerning an item that coincides with a condition specified by a reference request section 108, from the data management section 103, and returns the item to the reference request section 108.

An allocation processing section 105 issues an allocation request for an item specified by an allocation request section 109, to the data management section 103, and displays whether the allocation has succeeded on a display device 111.

The reference request section 108 issues a reference request to the workflow control section 102 in accordance with the condition specified by a worker via a workflow client.

The allocation request section 109 issues an allocation request for an item selected by an allocation subject selection section 110, to the workflow control section 102.

By using an item selection key, the allocation subject selection section 110 selects one item from among items returned from the reference processing section 104.

By the way, the allocation subject selection section 110 has a function of generating an item selection key for selecting an item, such as a value that becomes unique like a thread ID, a process ID, or an IP address, or a random number.

The item selection key used when the allocation subject selection section 110 selects an item may be altered according to a form in which a workflow client is used. For example, the item selection key may be an identifier added to an item acquisition request by a program of the workflow client, time when the request has been received, or an identifier depending upon a worker who has transmitted the item acquisition request.

Furthermore, the item selection key may be a value depending upon the client program, which operates on the terminal. For example, the item selection key may be a thread ID of the client program, a process ID of the client program, an object reference acquired from the client program, or an identifier of a connection formed from the client program to the server at the time of the item request.

The item selection key may be determined according to the connection form of the terminal on which the program of the workflow client operates and a value specific to the terminal. For example, the IP address or the MAC address may be used. In the case where such a fixed value is used, it is not necessary to recognize an identifier of a connection each time the connection is formed and consequently there is an effect that the efficiency at the time of allocation is improved.

The value of such an item selection key may be determined beforehand by a manager according to the configuration or the use form, or may be input by each worker of the workflow client as occasion demands.

By thus providing the workflow client with the allocation subject selection section 110 using the item selection key, and the reference request section 108 that issues a reference request to the workflow control section 102 on the basis of the condition specified by the worker via the workflow client, item allocation according to the request of the worker becomes possible.

In the workflow system, processing is conducted according to information that defines a business or work sequence called business process. This business process definition information may be stored on a hard disk of a computer on which the workflow control section 102 operates. Or the business process definition information may be stored in a database. In this case, the workflow control section 102 accesses the database as occasion demands, and acquires the business process definition information.

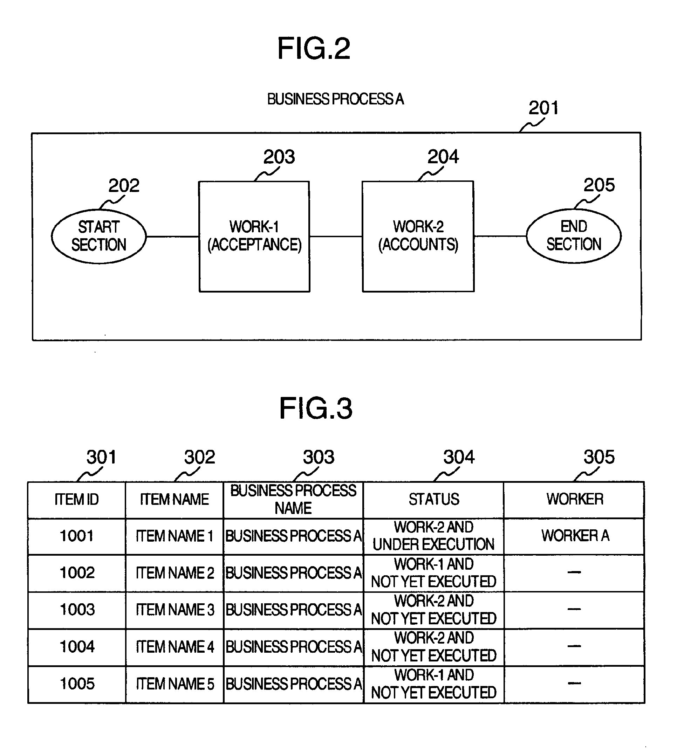

FIG. 2 shows an example of a business process of business to which the present invention has been applied. A business process A 201 includes a start section 202, a work-1 (acceptance) 203, a work-2 (accounts) 204, and an end section 205. An item generated in the start section 202 shifts to the work-1 (acceptance) 203. If the item is processed by a worker, the item shifts to the next work-2 (accounts) 204. In the same way, if the work-2 (accounts) 204 is processed by the worker, the item shifts to the end section 205. If the item shifts to the end section 205, it is meant that all of the business concerning this item has been processed. As a concrete example of the business process of business and item data for the business process, traveling expense liquidation business of employees and traveling expense data of employees can be mentioned. For example, it is now assumed that there are a sequence of data represented as "item ID: 2001, employee number: 8803, expense bearing: the employee, carfare: 5800, hotel charges: 10,000." The series of data is item data, and it is data to be processed in the business process. In the case where the item is processed in the business process, it is determined in the work-1 (acceptance) by referring to a database in the company whether there is an employee having an employee number contained in the item data. If as a result there is a pertinent employee and the expense bearing is the employee, then processing of calculating the sum total of the carfare and hotel charges contained in the item data and transferring the sum total to the employee's bank account via an accountants' department may be conducted in the work-2 ((accounts). This is an example of item data and business process, and other processing may be conducted for other data. As a database that stores a large number of such item data, the item data 101 is illustrated in FIG. 1. However, it may be a recording medium that can be accessed via a network, or may be a data storage device of a different form.

FIG. 3 is an item data table stored in the item data 101. The item data table includes an item ID 301 for identifying an item, an item name 302, a business process name 303, a status 304, and a worker 305. If an item is thrown into the business process A 201, then the item ID is newly provided with a number, and data of one line is added to the item data table. That is, the item ID provided with the number in the item ID 301, an item name specified at the time of throw-in in the item name 302, the business process A 201 of the throw-in subject in the business process name 303, "work-1 (acceptance) 203 and not yet executed" which is a status immediately after the throw-in in the status 304, and "not yet allocated" in the worker 305 are added to the item data table.

If an allocation request is issued to an item that is included in items existing in the work-1 (acceptance) 203 and that are not yet executed, and an item is allocated to the worker, then its status 304 is updated from "not yet executed" to "under execution" and the worker 305 is updated to the worker who has issued the allocation request. If an allocation request is issued to an item that is "under execution" in the status 304, then the allocation fails.

Depending upon the actual work contents, the work status is not executed in some cases even if the worker 305 is allocated. For example, this holds true in the case where the worker acquires an item but does not conduct processing. In such a case, it is possible to provide a different identifier and use the identifier as a criterion for determining whether allocation should be conducted. For example, it is possible to provide a column of work allocation time and a column of a work decision time in the item data table of FIG. 3, and judge an item for which work is not executed when a certain time has elapsed to be an allocation subject. Furthermore, the acceptance time of the item or processing time of work may be used as a decision criterion.

Processing conducted between the workflow client 107 and the workflow control section 102 in the case where an item allocation request is issued to the workflow client 107 by a worker will now be described.

If "the status is work-1 and it is not yet executed" is specified as the condition of an item that is an allocation item by the workflow client 107, then a reference request of a list of items that meet the condition is sent from the workflow client 107 to the workflow control section 102.

The reference processing section 104 of the workflow control section 102 receives the above described reference request, acquires data concerning items that coincide with the received condition from the data management section 103, and transmits the data to the workflow client 107.

The reference request section 108 of the workflow client 107 acquires the aforementioned item list from the workflow control section 102.

A concrete example of an item list acquisition condition specified by the workflow client 107 and data corresponding thereto will now be described by taking FIG. 3 as an example. If "the status is work-1 and it is not yet executed" is specified as the item list acquisition condition given by the workflow client 107, then two items respectively having 1002 as the item ID shown in the second line of FIG. 3 and 1005 as the item ID shown in the fifth line of FIG. 3 are returned.

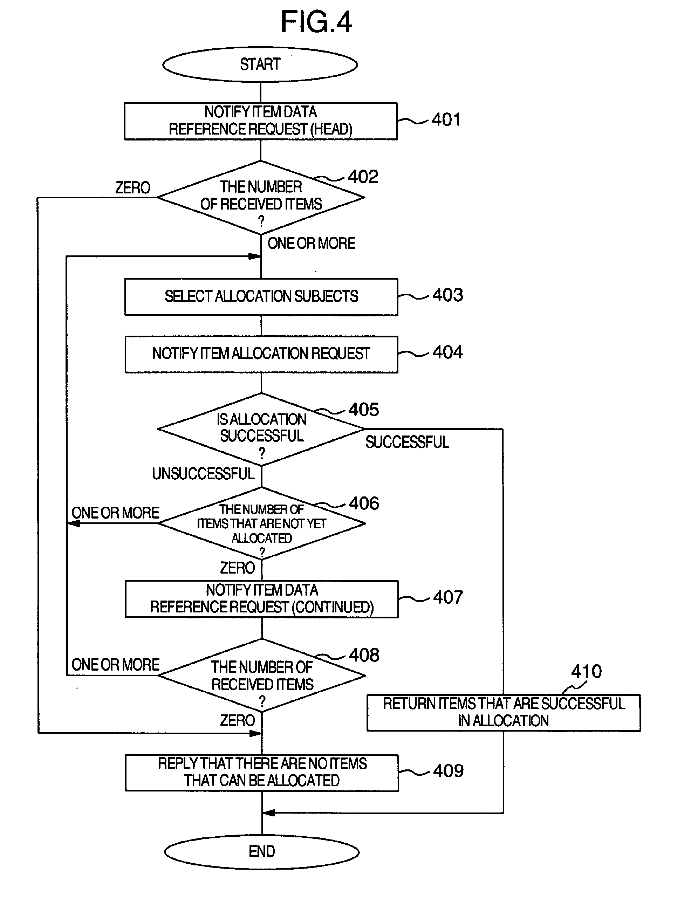

FIG. 4 shows a processing flow of the whole in the case where an item allocation request is issued to the workflow client 107 by a worker.

Via the workflow client 107, the worker specifies the number of items acquired at a time, a condition of an item that is an allocation subject such as "an item that exists in the work-1 (acceptance) 203 and that is not yet executed", and the order of acquisition such as "in the order of increasing item ID.

The workflow client 107 sends a reference request of item data of the specified condition to the workflow control section 102 via the reference request section 108 (step 401).

The reference processing section 104 of the workflow control section 102 transmits a reference request of the condition specified at the step 401 to the data management section 103, and examines the number of items returned from the data management section 103 in response to the request (step 402).

If the number of items is 0, the reference processing section 104 of the workflow control section 102 notifies the reference request section 108 of the workflow client 107 that there are no items that can be allocated (step 409).

If the number of returned items is one or more, then the allocation subject selection section 110 of the workflow client 107 selects one item from among items returned from the reference processing section 104 of the workflow control section 102 to the reference request section 108 of the workflow client 107, as the allocation subject by using a random number (or an item selection key) (step 403).

There are a plurality of methods of using the item selection key at the step 403. In an example of those methods, a numerical value of three least significant digits of the IP address is used as the item selection key, and an item of an item ID corresponding to a value of the remainder obtained by diving the number of acquired items by the value of the item selection key is selected. Another example of the methods includes the steps of deriving a value in the range of (the number of acquired items - 1) by using the hash function, acquiring an item list by using the value as an index, and selecting one item to be allocated from among items of the acquired item list.

From the allocation request section 109 of the workflow client 107, an allocation request for the item selected at the step 403 is transmitted to the allocation processing section 105 of the workflow control section 102 (step 404).

The allocation processing section 105 of the workflow control section 102 determines whether allocation for the item transmitted from the workflow client 107 has succeeded (step 405). If the allocation has succeeded, then the allocation processing section 105 of the workflow control section 102 notifies the workflow client 107 of data of the allocated item (step 410).

If the allocation has failed, then the allocation processing section 105 of the workflow control section 102 determines whether there is an item which is included in the items acquired at the step 401 and for which an allocation request has not been issued (step 406).

If there are items for which an allocation request has not been issued, then the allocation processing section 105 of the workflow control section 102 returns to the step 403 and selects one from the items for which an allocation request has not been issued. If an allocation request has been already issued for all items acquired at the step 401, then the allocation processing section 105 of the workflow control section 102 issues an item reference request to the data management section 103 via the reference processing section 101 beginning with an item next to that acquired the last time (step 407).

The reference processing section 104 examines the number of items returned for an item reference request (step 408). If the number of items is 0, then the reference processing section 104 notifies the workflow client 107 that there are no items that can be allocated (step 409). If there are one or more returned items, then the processing returns to the step 403.

In selection of the allocation subject items at the step 403, a random number is utilized. However, it is also possible to use a unique value that does not compete with clients of other workflow workers, such as a thread ID, a process ID, or an IP address, or a value depending upon the use form of the workflow client. By utilizing them, there is brought about an effect that the time required for generating a random number becomes unnecessary and the performance is improved.

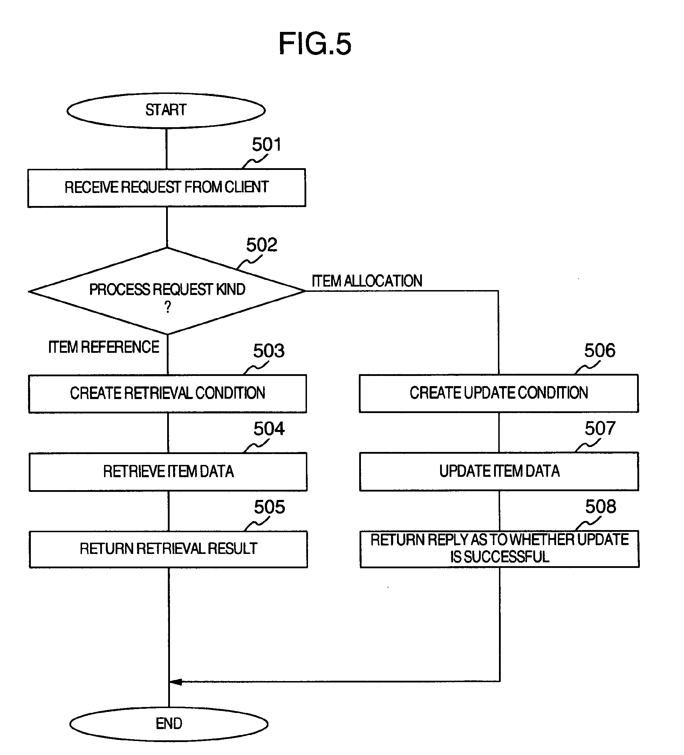

FIG. 5 shows a processing flow of the workflow control section 102.

Upon receiving a request from the workflow client 107 (step 501), the workflow control section 102 judges the kind of the request (step 502). Although a request kind decision section is not illustrated in the workflow control section 102, the workflow control section 102 includes the request kind decision section and judges the kind of the request issued by the workflow client 107 and transmits and receives the request as occasion demands.

In the case of the item reference request, the reference processing section 104 receives the request, creates a retrieval condition from the specified condition (step 503), and retrieves item data from the data management section 103 (step 504). The reference processing section 104 transmits the result of retrieval to the workflow client 107 (step 505).

In the case of the item allocation request, the allocation processing section 105 receives the request, and creates an update condition corresponding to the specified item allocation (step 506). For example, in the case where an item allocation request is to be issued for the item of the second line of FIG. 3, the allocation processing section 105 creates an update condition such as "the item ID is 1002 and a worker is not yet set." Then the allocation processing section 105 updates the item data (step 507).

In other words, it is attempted at the step 507 to specify the condition created at the step 506 and update the item data. If the item is allocated to another worker earlier, then the condition "a worker is not yet set" is not satisfied and consequently the update of the item data fails. If the item is not yet allocated to another worker, however, the update of the item succeeds. The data of the worker 305 is updated to the name of a worker who has issued the request and the data of the status 304 is also updated during the execution of the work-1.

The allocation processing section 105 transmits the success or failure of the item data update (i.e., a result indicating whether update of the item data has succeeded at the step 507) to the workflow client 107 (step 508).

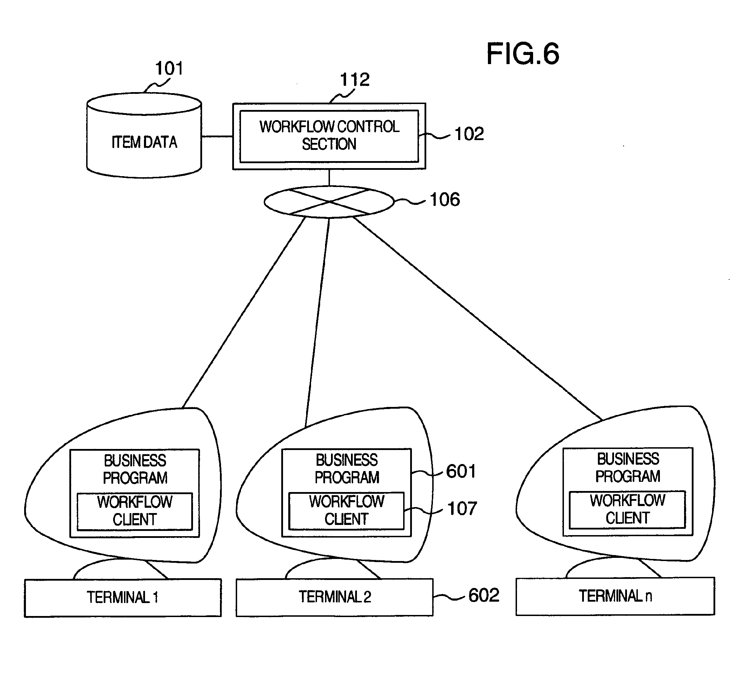

FIG. 6 shows an example of a configuration in the case where an IP address is used to select an allocation subject. In the case of such a system configuration that a business program 601 developed by utilizing the workflow client 107 operates on a terminal 602 of each worker, IP addresses of individual terminals 602, on which the workflow clients 107 issuing item allocation requests operate, are different, and consequently the IP addresses can be utilized to select the allocation subject.

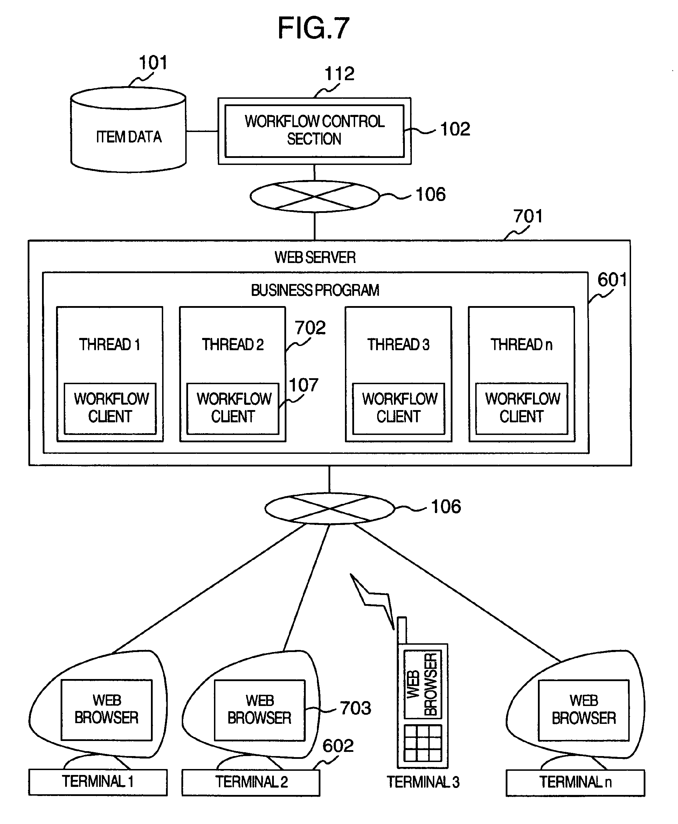

FIG. 7 shows an example of a configuration in the case where a thread ID is used to select an allocation subject.

In this system configuration, a business program 601 developed by utilizing the workflow client 107 operates on a Web server 701. A terminal 602 of an individual worker accesses the business program 601 on the Web server 701 by utilizing a Web browser 703. If a worker is connected to the Web server 701 by using the Web browser 703, the business program 601 creates one thread 702 corresponding to the worker. An item allocation request is issued to the workflow control section 102 from the thread 702. Since the workflow client 107 that issues an item allocation request operates as the thread 702 on the Web server 701, the IP address becomes the same even if the worker is different. In the case of such a system configuration, it is also possible to utilize the thread ID, which differs from worker to worker, instead of the IP address, in selecting an allocation subject.

Furthermore, in the case where the business program 601 is formed so as to be started as a different process corresponding to a worker when the worker is connected to the Web server 701 by using the Web browser 703 on the terminal 602, it is possible to utilize a process ID instead of a thread ID.

By the way, in the case where the present invention is applied, the terminal used by the worker is not limited to a computer, but the terminal may be a portable terminal having a communication function, or a portable telephone may be used.

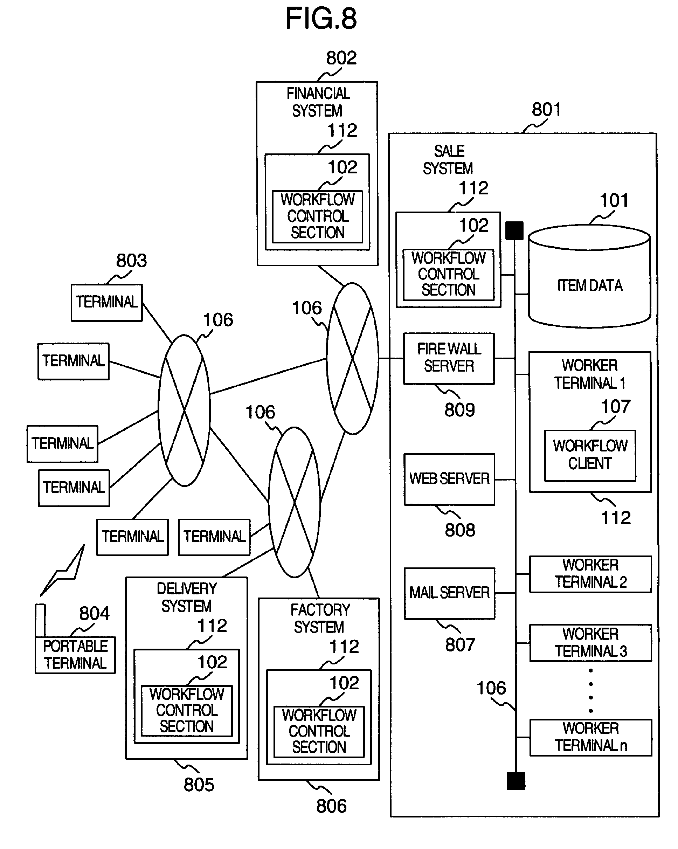

Another embodiment of the present invention is shown in FIG. 8.

In FIG. 8, an example in which the present invention has been applied to a sale system 801, a financial system 802, a delivery system 803 and a factory system 804 is shown. In FIG. 8, details of system inside of the financial system 802, the delivery system 803 and the factory system 804 are not illustrated. However, each system includes facilities required in the system, such as a workflow control section 102, item data (database storing item data) 101, and a worker terminal 112. Furthermore, each of a worker terminal 1 (112), a worker terminal 2, ···, a worker terminal n of the sale system 801 has a business program and a workflow client program 107 required in the sale system 801.

The sale system 801 receives order request data of a customer from a customer terminal 803 via a fire wall server 809, a Web server 808, or a mail server 807. The customer may access the sale system 801 and transmit an order request of commodities.

An example of the sale system is illustrated in the sale system 801 of FIG. 8. In addition to the mail server and so on, the sale system 801 may include such a call center that an order request is received by telephone and an operator inputs order request data received by telephone to a terminal.

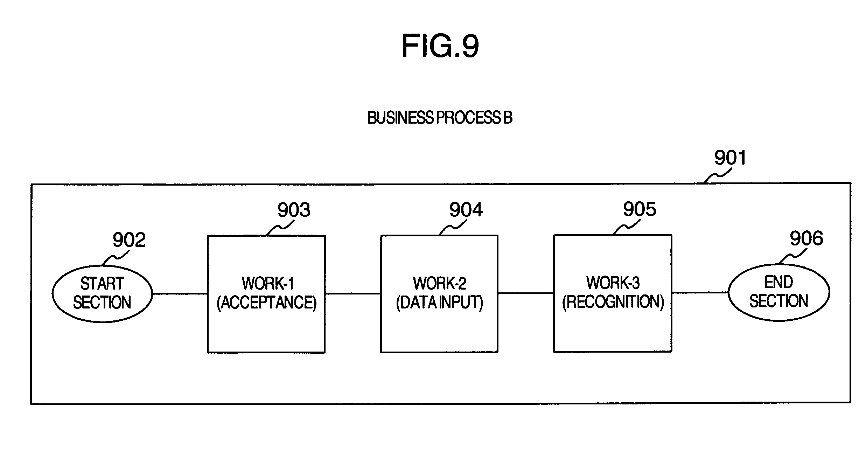

The order request data from the customer received by the sale system 801 is stored in the item data 101. The workflow control section 102 included in the sale system 801 processes the data stored in the item data 101 in accordance with a business process B 901 shown in FIG. 9. The business process B 901 is stored previously in a database the workflow control section can access by a system manager, or stored in a hard disk held by the computer 112 on which the workflow control section operates.

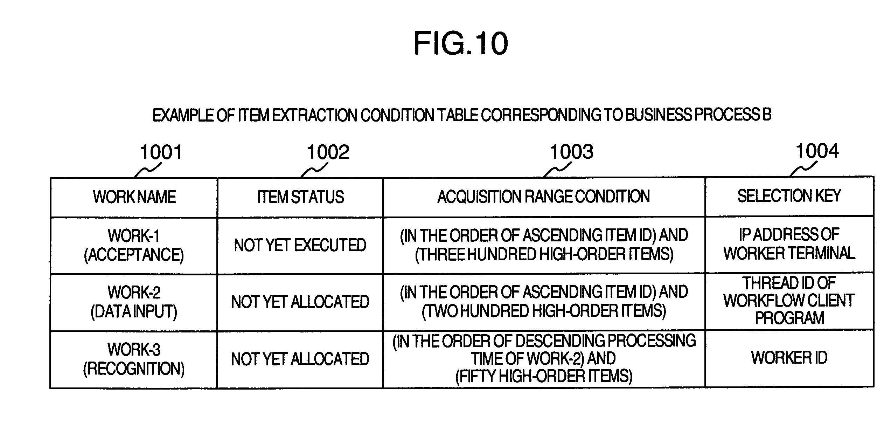

When processing an item in accordance with the business process B, the workflow control section 102 conducts the processing on the basis of an item extraction condition table corresponding to the business process B shown in FIG. 10. Information in the item extraction condition table of FIG. 10 is stored on a hard disk included in the computer 112 on which the workflow control section 102 operates, by the system manager. (The item extraction condition table may also be stored in a database the workflow control section 102 can access.)

In the case where the item allocation condition and allocation item extraction condition are thus determined previously on the server side, the allocation subject selection section 110 is not provided in the workflow client 107, but provided in the workflow control section 102. Furthermore, although not illustrated, it is also possible to extract an item in accordance with a predetermined condition and select an allocation subject by using an item selection key in the workflow control section 102, and provide a transmission section for transmitting the selected item to the workflow client.

The workflow control section 102 receives an item request of the work-1 (acceptance) from the worker terminal 112, extracts one item on the basis of the condition of a work name 1001, an item status 1002, an acquisition range condition 1003, and a selection key 1004, and sends the item to a terminal that has issued the above described item request request.

For example, it is assumed that one hundred thousand items to be processed in the work-1 (acceptance) 903 are stored previously in the item data 101. The workflow control section 102 retrieves the work name 1001 corresponding to the item request from the item extraction condition table of FIG. 10, and examines the item status of the corresponding work name (work-1).

Since the item status 1002 of the work-1 (acceptance) 1001 is "not yet executed", items that are "not yet executed" in the item status are extracted from one hundred thousand items in the item data 101.

Since the acquisition range condition 1003 corresponding to the work-1 (acceptance) is "(in the order of ascending item ID) and (three hundred high-order items)", the extracted items that are not yet executed are arranged in the ascending order and three hundred items in the rearranged items are acquired.

Since the selection key 1004 corresponding to the work-1 (acceptance) is "IP address of worker terminal", one item is selected from among the three hundred acquired items by using the IP address of the worker terminal as a key and processed in the worker terminal 112.

In the embodiment of FIG. 1, the workflow client 107 specifies the item status 1002 and the acquisition range condition 1003 of the item in the reference request section 108, and specifies the selection key 1004 in the allocation subject selection section 110. In the embodiment of FIG. 8, however, the workflow control section 102 holds the item extraction condition table as shown in FIG. 10, and allocates items to respective workflow clients 107.

Since the workflow control section 102 thus conducts item allocation, the labor required for respective workers to select the item selection condition can be saved. Therefore, the efficiency is improved. It is especially effective in the case where commodity order items have been transmitted from a large number of users to the sale system in large quantities in a short time as in network sale conducted in recent years. Furthermore, it is effective to apply the present invention also to mass data processing as in the case where data supplied from a large number of branches are subject to concentrated processing in a central head office.

Furthermore, it is also possible to cope with security management corresponding to the work, by specifying the item selection condition and selection key for each work. For example, it is also possible to set the selection key 1004 corresponding to "work-3 (recognition)" in the work name 1001 of FIG. 10 to "worker ID", determine whether the worker ID of the worker who conducts the work-3 has a recognized qualification, and allocate items on the basis of the result of the determination.

By the way, by specifying the selection condition and the selection key of the acquisition items every work, it is possible to alter the selection condition and the selection key so as not to compete with other workers according to the work. For example, in the case where the number of persons who processes the acceptance business has increased, it is possible to increase the number of conditions of the current acquisition range according to the number of processing persons, or alter the selection key or the method of using the selection key (the method using the hash function, or the method of selecting an item corresponding to a quotient obtained by dividing the number of items by the number of processing persons).

In applying the present invention, it is possible to not only conduct work in one system, but also cooperate with other systems.

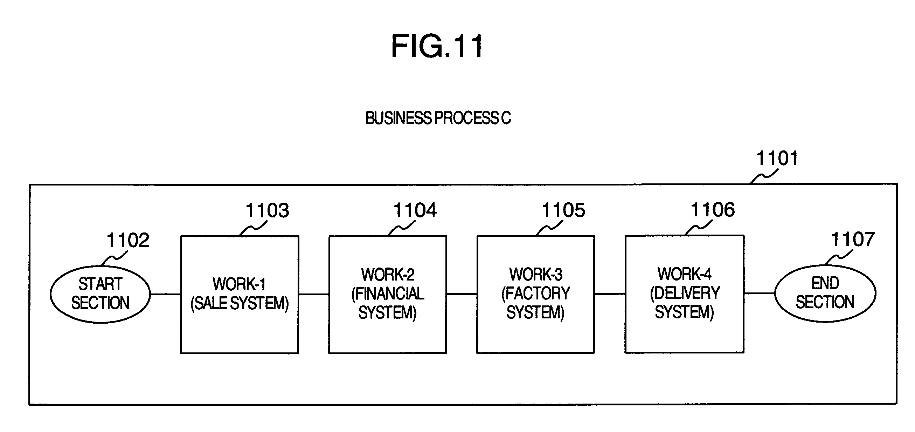

As one example, a business process C 1101 in a case of the commodity order utilizing the network is shown in FIG. 11. In this case, commodity order request data given by a customer and transmitted from a terminal 803 is accepted by the sale system 801. Data required for the settlement of accounts contained in the commodity order request data is processes in the financial system 802. Commodity data contained in the commodity order request data is processed in the factory system 806. Data concerning delivery contained in the commodity order request data is processed.

In the case where cooperation between systems is conducted, the workflow control section 102 included in each system transmits and receives necessary information. For example, in the case where processing in the sale system 801 is finished in the end section of the business process B,the workflow control section 102 of the sale system 801 transmits necessary data to the workflow control section 102 of the financial system 802 in accordance with the business process C 1101. Upon receiving the data, the workflow control section 102 of the financial system 802 stores the received data in the item data 101 of the financial system 802, and conducts processing of data in accordance with the business process included in the financial system.

Since the workflow control section 102 in each system includes the business process C as shown in FIG. 11, it becomes possible to grasp which work in the range from the acceptance of a commodity order from a customer to delivery is being conducted.

Also in the case where transaction data between systems (or between enterprises) are thus processed by using the workflow system, it is possible to specify the item acquisition range condition and the selection key according to the work of each system by regarding one certain large scale system as one work unit and applying the present invention thereto. Thereby, it is also possible to reduce the competition caused at the time of item allocation in the workflow in the large scale system. By the way, by conducting allocation depending on each system, it is also possible to reduce the time of exclusive waiting and reduce the time of business processing.

Furthermore, it is also possible to alter the selection key according to the situation of construction of each system. For example, in the case where a system is constructed in the CORBA base, it is also possible to use an object reference of the workflow client as the selection key. Therefore, it is possible to cope with a system more flexibly.

Furthermore, by using a function corresponding to the Web browser as described with reference to FIG. 7, business processing and business grasp become possible in the mobile environment or the like, and it is also possible to improve the business efficiency.

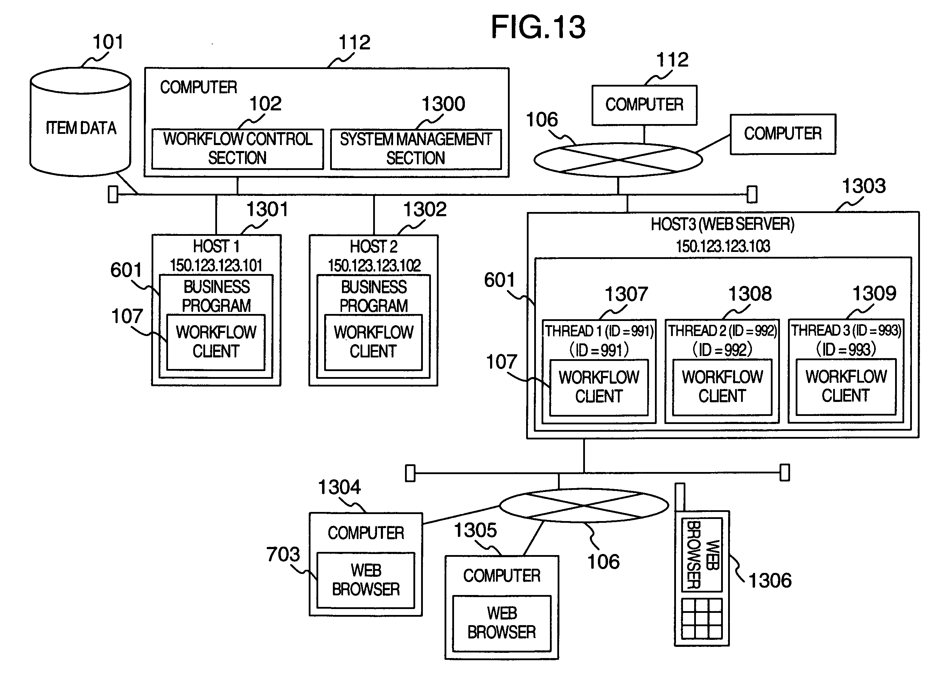

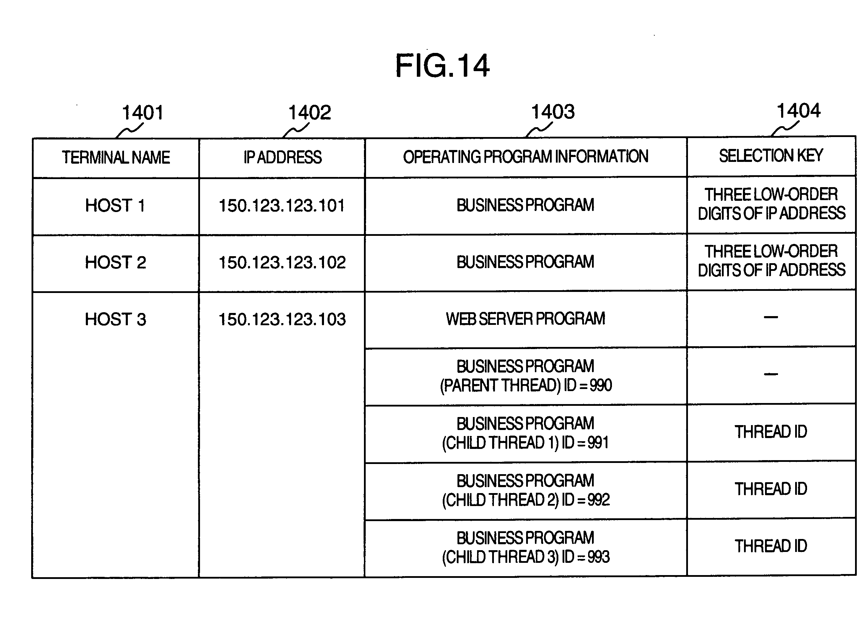

An example of a method of acquiring and utilizing a selection key according to the situation of the system construction as described above will now be described by referring to FIGS. 13 and 14. The IP address, thread ID, and so on shown in FIGS. 13 and 14 are numerical values for convenience for describing the present invention, and they are different from actual numerical values.

FIG. 13 shows the case where the present invention has been applied to such a system that computers 1301 to 1303 that can be managed by using the IP address and terminals (portable telephones and portable terminals) 1304 to 1306 that can utilize the Web browser are connected via the network 106. The system management section 1300 has a function of managing hardware information and software in-formation of these computers and various terminals. Although not illustrated, hardware (such as a fire wall server, a security server, and a gateway) that operate software required to conduct work via the network may also be connected.

It is now assumed that the host name of the computer 1301 is Host1 and the IP address is 150.123.123.101. It is assumed that a program required for utilizing the workflow client 107 operates in the computer 1301. The same is true of the computer 1302 as well.

It is now assumed that the host name of the computer 1303 is Host3 and the IP address is 150.123.123.103. A Web server program is operating in the computer 1303. Upon accepting a business request via a Web server, a business program 601 operating in the computer 1303 generates a thread in response to the business request, and makes the workflow client 107 operate.

The business program 601 of the computer 1303 and computers (portable terminals) 1304 to 1306 will now be described.

The computer 1304 transmits a business request to the computer 1303 by utilizing the Web browser operating in its own computer. The business program 601 of the computer 1303 accepts the business request via the function of the Web server program, generates a child thread 1 (1307), and makes the workflow client operate. In the same way, each of the computer 1305 and the portable terminal 1306 transmits a business request. Upon accepting the business requests, the business program 601 generates a child thread 2 (1308) and a child 3 (1309), and makes workflow clients for processing respective business requests in respective threads operate.

For the purpose of description, it is now assumed that the business program 601 that accepts a business request via the function of the Web server program, generates a thread, and makes the workflow client operate is a parent thread and its thread ID is 990. Furthermore, it is assumed that thread IDs of the generated child threads 1 to 3 are 991, 992 and 993, respectively.

Information concerning the computer and the program operating in the computer, such as the host name, IP address, and the thread ID, shown in FIG. 13 is retained by the system management section 1300. The system management section 1300 may operate on a computer separate from the workflow control section 102, or an existing program product having a system management function may be used as a substitute therefor.

FIG. 14 shows an example of the case where selection keys are specified by utilizing information retained by the system management section 1300 of FIG. 13 (terminal name 1401, IP address 1402, and operating program information 1403).

As indicated by the selection key 1404 of FIG. 14, it is possible to specify the selection key by utilizing the IP address 1402 for the workflow clients of Host1 and Host2 and use the value of the thread ID as the selection key for the workflow client operating on Host3. The present invention can be also applied to the case where there is no correspondence of one workflow client to one computer and the case of access from a terminal that is not managed by the IP address. By thus specifying the selection key according to how to use the workflow client, the competition of item acquisition can be reduced as compared with the conventional technique.

In FIGS. 13 and 14, an example using the IP address and the thread ID is shown as an example for implementing the present invention. However, another value (such as the process ID, job number, object reference, or the number of computers) may be used according to the system management information. It is also possible that the workflow control section has the system management information and the system manager specifies the selection key.

In accordance with the present invention, in such a workflow system that a plurality of terminals that process items and a server that stores items to be processed by the terminals are included and items are processed in accordance with the previously defined process sequence, the server allocates items to the terminals.

A terminal transmits an item acquisition request containing a process to be processed, to the server.

On the basis of the item acquisition request containing the process to be processed that has been received from the terminal, the server extracts items that correspond to this process and satisfy the predetermined condition.

This condition is, for example, one hundred high-order items in the order of time when registered in the server, or one hundred high priority order items. The server side can freely set the condition. In addition, the server extracts on item from among the extracted items by using the item selection key. The item selection key is a key that does not assume the same value or that is low in probability of assuming the same value, such as a random number or a thread ID.

Even if item acquisition requests for the same process are received from a plurality of terminals, therefore, the possibility that different items are allocated to respective terminals becomes high and exclusive waiting is reduced.

In the case where item acquisition requests have been received from a plurality of terminals, the server may extract a plurality of items for respective terminals so that overlapping between terminals will be caused in partial items, and extract one item for each terminal from among the extracted items by using the item selection key. By thus extracting items so that overlapping between terminals will be caused in partial items, the probability of being allocated can be raised. For example, items that are high in priority and old items are extracted for two or more terminals or all terminals, and items are extracted from among the extracted items by using the item selection key. By doing so, the probability that items that are high in priority or old items are selected preferentially becomes high. The priority is defined for each item. Whether an item is old can be determined by comparison with the time when the item was stored.

Furthermore, the server may extract a plurality of items so that the same item will be at least allocated to two or more terminals, and extract one item for each terminal (each workflow client) from among the extracted items by using the item selection key. By thus making the same item allocated, the possibility of the occurrence of competition becomes higher, but all items are selected with the same probability.

In other words, in the case where a plurality of items are grouped into group items and a plurality of terminals (a plurality of workflow clients) can acquire a certain same group item, the possibility of competition becomes high. However, since the allocation subject can be determined by using the selection key, the competition and exclusive waiting can be avoided.

According to the present invention, when item allocation requests are generated simultaneously by a plurality of workers, allocation subjects are thus selected so as not cause competition. As a result, exclusive waiting can be reduced, and the efficiency of allocation processing in large scale business can be raised.

In the case where allocation requests of work items are generated by a plurality of workers, allocation subjects are selected according to the work system. As a result, exclusive waiting can be reduced, and the efficiency of allocation processing in large scale business can be raised.

## Claims

1. In a workflow system that a plurality of computers (112) and a server (112) connected to said computers are included and items are processed in said computers in accordance with a business process including one or more previously defined works, an item allocation method in said server comprising the steps of:
previously providing said server with an item extraction condition table including an item acquisition range condition and an item selection key;
receiving an item acquisition request from a computer included in said computers;
extracting items satisfying said item acquisition range condition, based on said received item acquisition request and said item acquisition range condition;
selecting one item from among said extracted items by using said item selection key; and
transmitting said selected item to said computer that transmitted said item acquisition request.

2. In a workflow system that a plurality of computers (112) for processing items and a server (112) that stores items to be processed by said computers are included and said items are processed in accordance with a business process including one or more previously defined works, an item allocation method whereby said server allocates items to said computers, said item allocation method comprising the steps of:
extracting a plurality of items so as to at least allocate identical items to two or more computers included in said computers, based on item acquisition requests received from said plurality of computers;
extracting one item for each of said computers from among said extracted items by using an item selection key; and
transmitting said extracted item to each of said computers that requested item acquisition.

3. An item allocation method according to claim 2, wherein said item selection key (1004; 1204; 1404) is an identifier added to said item acquisition request, time when said request has been received, or an identifier depending upon a worker who has transmitted said item acquisition request.

4. An item allocation method according to claim 1, wherein said item selection key (1004; 1204; 1404) is a value depending upon a client program that operates in each of said computers.

5. An item allocation method according to claim 2, wherein said item selection key (1004; 1204; 1404) is a value depending upon a client program that operates in each of said computers.

6. An item allocation method according to claim 4, wherein said value depending upon a client program that operates in each of said computers is a thread ID of the client program, a process ID of the client program, an object reference acquired from the client program, or an identifier of a connection formed from the client program to the server at time of said item request.

7. An item allocation method according to claim 5, wherein said value depending upon a client program that operates in each of said computers is a thread ID of the client program, a process ID of the client program, an object reference acquired from the client program, or an identifier of a connection formed from the client program to the server at time of said item request.

8. An item allocation method according to claim 1, wherein said item selection key (1004; 1204; 1404) is either an IP address or an MAC address of each of said computers.

9. An item allocation method according to claim 1, wherein said item selection key (1004; 1204; 1404) is either an IP address or an MAC address of each of said computers.

10. An item allocation method according to claim 1, wherein said item allocation method is applied to each of works of a business process stored in the server.

11. An item allocation method according to claim 2, wherein said item allocation method is applied to each of works of a business process stored in the server.

12. In a workflow system including a server computer (112) and a plurality of client computers (112), an item allocation method comprising the steps of:
connecting said server computer to said plurality of client computers and a database (101) that stores items;
receiving, in said server computer, item acquisition conditions and item acquisition requests from said client computers;
extracting, in said server computer, items from among items stored in said database, based on said received item acquisition conditions;
transmitting said extracted items from said server computer to said client computers; and
selecting, in each of said client computers, items to be processed in the client computer, from among items received from said server computer by using an item selection key.
